# EUROPEAN PATENT SPECIFICATION

(11) **EP 2 021 193 B1**
(45) Date of publication and mention of the grant of the patent: **14.09.2011**
(21) Application number: 07719303.5
(22) Date of filing: 30.05.2007
(51) Int. Cl.: B60C 11/00

(54) **TOROIDAL BODY SUPPORT FOR TIRE TREAD**
TOROIDKÖRPERSTÜTZE FÜR REIFENLAUFFLÄCHE
SUPPORT TOROIDAL POUR BANDE DE ROULEMENT DE PNEU

(30) Priority: 31.05.2006 BR MU8601015 U
(43) Date of publication of application: 11.02.2009
(73) Proprietor: Borrachas Vipal S.A., Nova Prata RS (BR)
(72) Inventor: HOFFMANN, Nair Ana P.B., Nova Prata - Rs (BR); BUENO, Ivan Stefano, Nova Prata - Rs (BR); HAMERSKI, André, Nova Prata - Rs (BR); GUERRA FILHO, Roni, Nova Prata - Rs (BR)
(74) Representative: Mittler, Enrico
(86) International application number: PCT/BR2007/000135
(87) International publication number: WO 2007/137383

(56) References cited:
- EP-A2- 0 335 694
- DE-A1- 1 505 203
- GB-A- 746 375
- GB-A- 869 752
- US-A- 3 236 709

## Description

The object of the present Invention is a toroidal body, prepared as a separate component and universal use, to be acquired by cargo transportations companies and collective passenger transportation, for use as a support body for the application of tread of the desired and convenient type to meet the immediate need of a directional or traction tire, to meet the specific use of the vehicle.

### BACKGROUND OF THE INVENTION

The manufacturing technology of pneumatic coverings for vehicle wheels in general is already widely known, commonly referred as tires, mass produced by the industry to supply vehicle manufacturers and the spare parts market; the tires produced and sold as finished and ready to use products, in their usual toroidal configuration provided by a peripheral zone that contacts with the roadway surface, technically called tread.

The tread is presented in a variety of configurations for the contact zone with the terrain and its configuration is characterized by the arrangement of the grooves aligned in transversal direction, slanting and circumferential. Each configuration is designed to assure to the vehicle driver the needed stability, adherence, resistance and functionality, according to tire type, traction or directional tire, in accordance with the climate and pavement or terrain conditions where the vehicle is intended to be used.

The concept evidences and justifies the existence of thousands of tread designs and the numerous different elastomer material compositions said treads are made of, which represents a huge economic-financial and practical problem for the companies that operate with vehicle fleets for the transportation of cargo and passengers.

From the economic perspective, the disadvantages are the heavy immobilization of financial resources to keep stocks, for ready use to substitute the structurally worn-out tires, and in its practical aspect, the problem is due to the handling and storage of hundreds of new tires, with varied types, required to meet the fleets' daily needs, with vehicles running under different weather, roads and use conditions.

The state of art shows thousands of patents related to production engineering of the most varied types of tires, proposing the integrated and unitary tire construction with a carcass (essentially structured with laminated elements, plies reinforced by textile cords or metal wires) with specific tread as shown, for example, in the patents EP 897.813 in the name of Bridgestone, EP 943.837 in the name of Continental, WO 03/053.662 in the name of Pirelli, WO 02/05143 in the name of Pirelli and EP 0.594.072 in the name of Pirelli, all these patents are related to manufacture and vulcanization, as finished product individually characterized by specific building and functional features, allowing each tire to be used exclusively in vehicles for predefined use, such as in cities, paved roads, trails, unpaved roads, desert or swampy zones and others.

Besides the manufacturing of new tires, it is also known as In the art, the retreading and remolding of used tires, that have a carcass in good condition and a worn-out tread zone, that is, when the height of the tread is lower than the safety level set for each type of tire.

In said recovery, the worn tread is stripped of and the external surface of the toroidal body is smoothed so that the tread can be secured by adhesives and by the vulcanization of the elastomer material, the tread, especially produced and sold as a component for use in a number of tire retreading shops that exist in the market.

GB 746375 discloses a method for retreading tyres by bonding to the worn surface of the tyre a pre-vulcanised tread band in which a flexible impermeable band or membrane is positioned around the circumference of the tyre.

To make obvious the big economic-financial and practical problems stated above and to permit the customized and tailored mounting of the desired and most suitable type of tire, by the user himself, it is the object of the present invention, a toroidal body available that may be sold avulse and finished, having a flat surface, prepared to receive, at any moment later, any kind of tread, allowing with this new constructive arrangement, a practical universal solution to a body-support for universal use at the final phase of the tire construction, with the functional characteristics desired by the user, who can chose and fasten the tread model he considers most suitable on said flat surface using the means currently know in the art.

### SUMMARY OF THE INVENTION

The practical solution to the current problem concerning the storage of a variety of ready tires, comprising the most varied tread designs, to allow the choice of the most suited type for immediate use, is provided by the functional improvement and use resulting from the availability of a universal support body with limited storage, reducing stock diversification and space by storing varied types of treads, providing a practical optimization of invested resources, handling and storage of a substantially reduced stock.

An additional and relevant advantage provided by the functional improvement resulting from the use of the universal body-support in object, is due to the technical feasibility, offered to any tire remolding shop, normally equipped with resources and equipment to substitute used worn treads, by new ones, applying vulcanization in loco, in autoclaves, to allow the mounting and production of new tires, meeting the typological specifications required by the client, that is, creating a niche in the tire market, along with mass production, to provide a customized and tailored service, with just a small stock of universal body-supports and a wide variety of treads with different designs.

The analysis of the practical advantages of the offer of the universal body-support in object on the market, by a substantial reduction of the need of huge stocks of new tires and their substitution by some body-supports and many treads, is evidenced by simply considering the fact that a truck or bus tire can weigh many tens of kilos and require large storage areas, as toroidal body, when compared to separately produced treads, which are flat, extruded bodies, with a length corresponding to the size of the carcass, with just some kilos of weight and allowing the pile-up storage, with reduced space occupation.

### BRIEF DESCRIPTION OF THE DRAWINGS

The present Invention will be better understood when described in the light of the attached illustrative drawings, in which:
- Figure 1 is a schematic view of the straight section of the support toroidal body showing the new arrangement of materials in the tread application zone;
- Fig.2 is a perspective view of a separate tread;
- Fig.3 is a cross section view in perspective of the body-support in Fig 1, according to those available on the market, and
- Fig.4 is a cross section view, in perspective, of the body-support in Fig. 3 without the coating tissue, ready to mount a tread to produce a new tire.

### DETAILED DESCRIPTION OF THE INVENTION

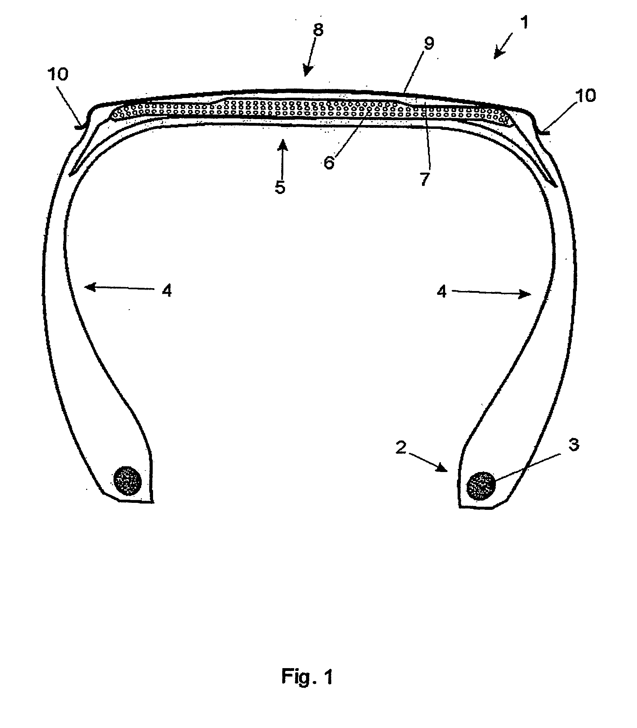

The universal body-support (1) in object, presents a usual structure schematized in the straight cut of figure 1, presenting the rim zone (2) reinforced by braided steel wire frames (3), the side walls (4) formed by laminated elastomeric elements and the flat zone (5) constituted of plies (6) reinforced by steel wire or natural or artificial textile yarns, said plies (6) being covered by an elastomeric layer (7), the whole structure normally forming the carcass on which the tread, constituted of a thick elastomeric band profiled by extrusion, is directly molded by vulcanization of the whole tire in a mold that has the desired tread design, producing a new tire as the ones mass produced today and sold to the vehicles manufacturing companies and to the spare parts market.

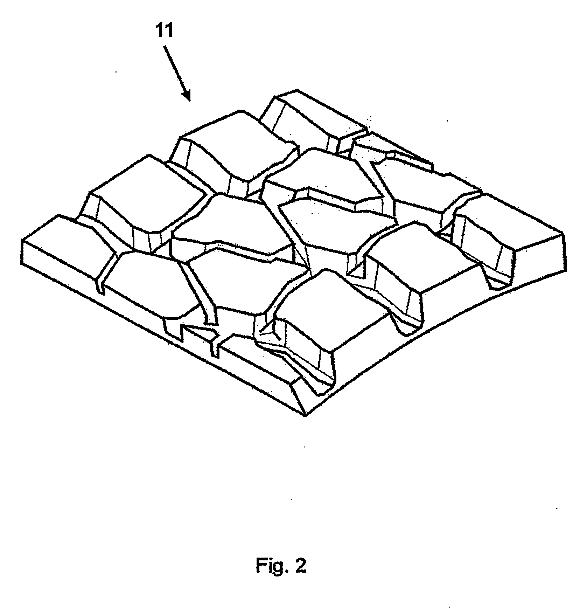

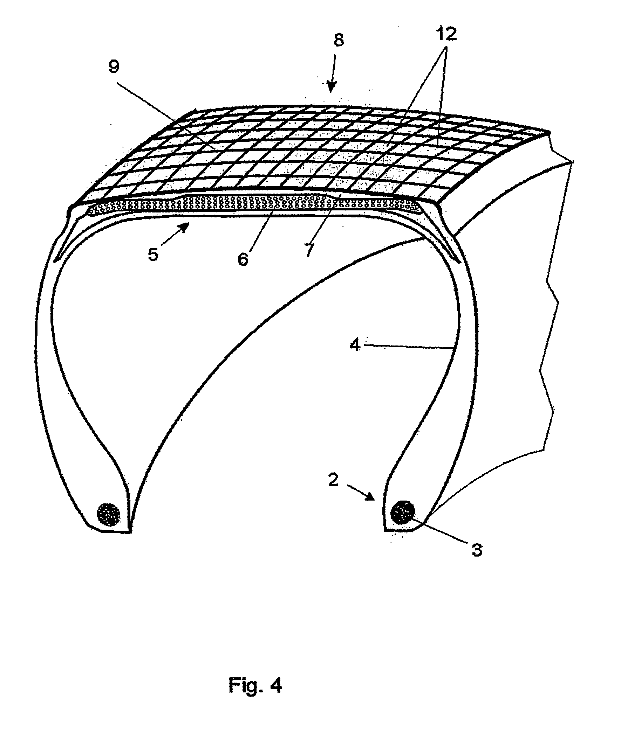

The new arrangement in object projects the finish of the said carcass (1) as a ready and avulse product, being its flat circumferential surface (8) corresponding to the smooth layer (7) covered by a layer of wove wires (9) exceeding the width of said flat leaving edges (10) so that said layer can be removed when the owner of the said body-support (1) decides to use it (figure 4) for the fastening on said peripheral flat zone (8) of the toroidal body, of a tread (11), for example the one show in Figure 2, completing then the custom manufacturing of the tire.

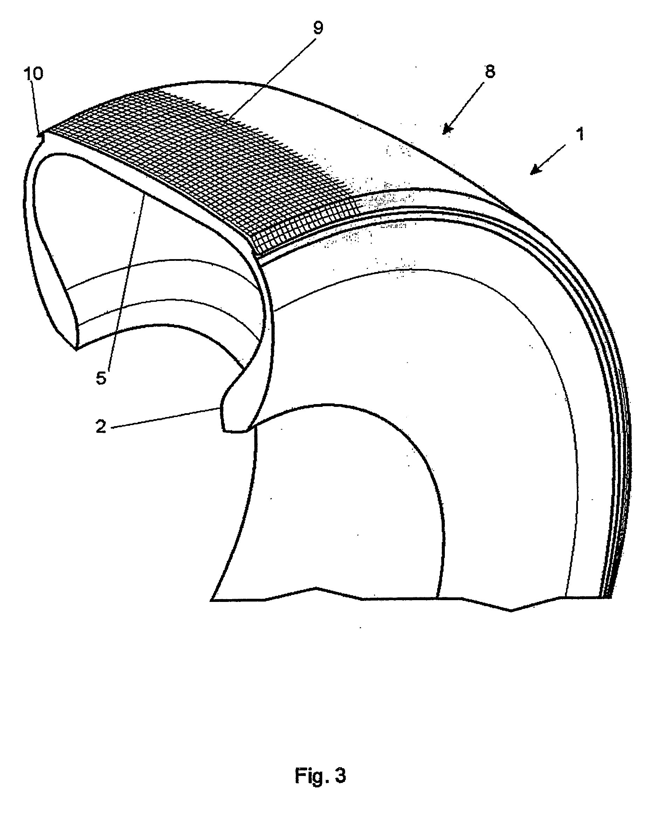

In figure 3, the body-support (1) of this invention is shown in its market arrangement as a finished and separate tire component, being that the textile coating (9) in the flat zone (8) has the double function of protection of said zone (8) and of creating ridges on the smooth surface (7) of the mentioned part, ridges (12) that correspond to the warp and the woof of the woven yarns, resulting in a rugged surface more suited to tread adhesion (11), usually secured by adhesives and complimentary vulcanization.

The practicality and superior functionality of the universal body-support, in object, is due to the fact that a tire carcass is available as a finished product (1) without tread, presenting a new surface arrangement (7) by the pressure coating of the woven yarn layer (8) (of natural, artificial or metallic textile nature), providing double action to protect the flat zone (7), that is, the base of the tread to be secured later by the buyer's decision, choosing the best suitable model to the projected conditions of use of the resulting new tire, thus producing customized tires in loco, with the body-support and a variety of stored treads (11).

Said woven yarn coating (9, 10) can be manually removed, when using the body-support, performing the first function of the body support flat zone protection layer (7, 8), during its storage, and a second function of ridge element (12) on said zone (7, 8) making it rugged and grooved to increase reception and retention of the adhesive usually used to anchor tread when preparing the set, for the vulcanization phase in autoclave.

By the new arrangements of the present invention, the above stated practical and economic advantages are achieved, granting it with the inventive step in a context of absolute novelty, since tires carcasses have never been commercialized as finished separate products, superficially prepared to allow the storage by the user-consumer and customized ready-use for the production in loco of new tires, the user can choose a tread of his preference, from varied types, that can be equally stored and fastened by the known complimentary vulcanization techniques in situ.

## Claims

1. Toroidal body support (1) for treads comprising a normal structure with rims (2), side walls (4) and a flat zone (5) constituded of reinforced plies (6), said plies being covered by an elastomeric of layer (7), the whole structure forming a carcass for a tread, **characterized by** the fact that the body support (1) is finished, without tread, comprising a peripheral flat zone corresponding to the elastomeric layer (7) covered by a removable layer (9) of woven yarns, with exceeding width in relation to the said flat zone (7) to form side edges (10) to assist its removal.

2. Toroidal body support for treads, according to claim 1, **characterized by** the fact that said woven yarn layer (9) can be made of natural, artificial or metallic textile fibers.

3. Toroidal body support for treads, according to claim 1, **characterized by** the fact that the peripheral flat zone (7) presents grooves (12) and furrows creating irregularity.

4. Toroidal body support for treads, according to claim 3, **characterized by** the fact that said body support (1) has universal utility, being able to receive on its flat zone (7, 8), after removal of the removable layer (9) any type of tread (11) over the resulting rough surface (12) completing, in that event, the construction in loco of a new tire, with customized characteristics.

## Patentansprüche

1. Ringförmige Aufbaustütze (1) für Reifenprofile mit einer normalen Struktur mit Rändern (2), Seitenwänden (4) und einer flachen Zone (5), die aus verstärkten Gewebelagen (6) gebildet ist, wobei die Gewebelagen durch eine elastomere Schicht (7) bedeckt sind, wobei die gesamte Struktur eine Karkasse für ein Reifenprofil ausbildet, **gekennzeichnet durch** die Tatsache, dass die Aufbaustütze (1) ohne Reifenprofil mit einer peripheren flachen Zone entsprechend der elastomeren Schicht (7), die **durch** eine entfernbare Schicht (9) aus gewebten Garnen mit übermäßiger Breite in Bezug auf die flache Zone (7) bedeckt ist, um zur Unterstützung ihrer Entfernung Seitenflanken (10) auszubilden, fertig bearbeitet ist.

2. Ringförmige Aufbaustütze für Reifenprofile nach Anspruch 1, **gekennzeichnet durch** die Tatsache, dass die Schicht (9) aus gewebten Garnen aus natürlichen, künstlichen oder metallischen Textilfasern hergestellt sein kann.

3. Ringförmige Aufbaustütze für Reifenprofile nach Anspruch 1, **gekennzeichnet durch** die Tatsache, dass die periphere flache Zone (7) Nuten (12) und Furchen bietet, die eine Unregelmäßigkeit erzeugen.

4. Ringförmige Aufbaustütze für Reifenprofile nach Anspruch 3, **gekennzeichnet durch** die Tatsache, dass die Aufbaustütze (1) eine universelle Brauchbarkeit hat, während sie auf ihrer flachen Zone (7, 8) nach einer Entfernung der entfernbaren Schicht (9) irgendeinen Typ von Reifenprofil (11) über der resultierenden groben Oberfläche (12) aufnehmen kann, was in diesem Fall die Ausbildung eines neuen Reifens am richtigen Ort mit kundenspezifischen Eigenschaften abschließt.

## Revendications

1. Support de corps toroïdal (1) pour des bandes de roulement comprenant une structure normale avec des jantes (2), des parois latérales (4) et une zone plate (5) constituée de plis renforcés (6), lesdits plis étant recouverts par une couche élastomère (7), toute la structure formant une carcasse pour une bande de roulement, **caractérisé en ce que** le support (1) est fini, sans bande de roulement, comprenant une zone plate périphérique (7) correspondant à la couche élastomère recouverte par une couche amovible (9) de fils tissés, avec une largeur en excès par rapport à ladite zone plate (7) afin de former des bords latéraux (10) pour aider à son retrait.

2. Support de corps toroïdal pour bande de roulement, selon la revendication 1, **caractérisé en ce que** ladite couche de fils tissés (9) peut être réalisée à partir de fibres textiles naturelles, artificielles ou métalliques.

3. Support de corps toroïdal pour bande de roulement, selon la revendication 1, **caractérisé en ce que** la zone plate (7) présente des rainures (12) et des sillons créant une irrégularité.

4. Support de corps toroïdal pour bande de roulement, selon la revendication 3, **caractérisé en ce que** ledit support (1) a une utilité universelle, pouvant recevoir sur sa zone plate (7, 8), après le retrait de la couche amovible (9), n'importe quel type de bande de roulement (11) sur la surface rugueuse résultante (12) complétant, dans ce cas, la construction sur site d'un nouveau pneu, avec des caractéristiques personnalisées.
